# DEMANDE DE BREVET EUROPEEN

(11) **EP 2 369 440 A2**
(43) Date de publication de la demande: **28.09.2011**
(21) Numéro de dépôt: 11158312.6
(22) Date de dépôt: 15.03.2011
(51) Int. Cl.: G06F 1/16, G06F 3/06, G11B 33/12

(54) **Enregistreur audio-vidéo à disque dur SATA extractible**

(30) Priorité: 26.03.2010 FR 1001234
(71) Demandeur: Metronic, 37310 Tauxigny (FR)
(72) Inventeur: Lamblain, Nicolas, 35500 Vitré (FR)
(74) Mandataire: Marconnet, Sébastien

(57) **Abrégé**

L'invention concerne un enregistreur de signaux de télévision numérique comprenant des moyens de réception et de décodage des signaux audio-vidéo et des moyens de contrôle d'un disque dur au format SATA, lesdits moyens de contrôle étant situés sur la carte mère de l'enregistreur, caractérisé en ce qu'il dispose d'un logement (14) situé en face avant, ledit logement possédant des dimensions semblables à celle du disque dur, et disposant d'un connecteur SATA (15) femelle au fond dudit logement (14), ledit connecteur étant relié aux moyens de contrôle du disque dur via une liaison (17) série interne à l'enregistreur.

## Description

Depuis que les magnétoscopes ont vu le jour vers la fin des années 1970, les téléspectateurs peuvent enregistrer une émission de télévision pour une visualisation ultérieure. Après avoir lutté un temps contre ses concurrents Betamax et V2000, le format japonais VHS a connu un vif succès. La popularité de ce format a permis au prix des cassettes d'atteindre des niveaux très abordables.

Les utilisateurs de magnétoscope ont ainsi pris l'habitude d'enregistrer les émissions de télévision à deux fins distinctes : le stockage à court terme et l'archivage. Le stockage à court terme est particulièrement adapté pour enregistrer une émission qui passe en l'absence de l'utilisateur. Ce stockage court terme lui permet de regarder l'émission dès son retour. On utilise également le stockage court terme pour enregistrer une émission pendant qu'on en regarde une autre.

Au contraire, l'archivage est une action pour le long terme qui consiste par exemple, à se constituer une vidéothèque, et nécessite alors un espace de rangement adapté. Le magnétoscope à cassette VHS a, pendant de nombreuses années, été le moyen privilégié pour le stockage court terme aussi bien que pour l'archivage d'émissions de télévision analogique.

L'arrivée de la télévision numérique rend peu à peu le magnétoscope à cassette obsolète. Certes, un magnétoscope peut se connecter sur la sortie analogique de tout récepteur de télévision numérique (boîtier externe ou téléviseur) via une liaison péritel, par exemple. Mais l'émergence de supports de stockage numériques, tels que les DVD, disques durs ou autres clés USB à mémoire flash apporte des avantages substantiels en termes de temps d'accès, de qualité d'enregistrement ou d'encombrement. Exprimée en minutes de vidéo par cm³, la densité d'une cassette VHS n'atteint pas 0.4, alors qu'elle vaut environ 40 pour un DVD et atteint 230 pour un disque dur. Pour des supports minuscules tels des cartes de type "micro-SD" qui ne sont pas plus gros qu'une pièce de deux centimes, on stocke plusieurs heures de vidéo, soit une densité de 5 à 10000 fois supérieure à celle d'une cassette VHS.

Le coût ramené à la minute de stockage est également très favorable aux supports numériques. Par exemple, on l'évalue à environ 1€ pour une heure d'enregistrement sur une cassette VHS, comparé à 20 centimes sur un disque dur.

Parce que les données audio-vidéo peuvent être stockées sans traitement ni compression, le support d'enregistrement numérique procure une meilleure qualité, et c'est le seul support utilisable en pratique pour enregistrer de la vidéo en haute définition.

Grâce à l'arrivée de la télévision numérique, les enregistreurs et les décodeurs de télévision ont pu être intégrés dans le même équipement, que ce soit sous forme de téléviseur intégré ou sous forme de boîtier externe connecté à un téléviseur. L'intégration permet de mettre en oeuvre des moyens qui facilitent la gestion des supports d'enregistrement, notamment grâce à des liaisons de données au format numérique.

On a ainsi vu se populariser les enregistreurs capables à la fois de recevoir et décoder des émissions de télévision numérique (particulièrement la télévision numérique terrestre) et de gérer des supports d'enregistrement internes ou externes tels que :
- clés USB à mémoire flash
- DVD ROM ou réinscriptibles
- disques durs USB externes
- disques durs (IDE ou SATA) internes

Les clés USB ont le mérite d'être très mobiles mais ne permettent pas de stocker de nombreuses heures d'enregistrement, à cause de leur capacité limitée à quelques giga-octets (Go). Par ailleurs, leur prix de revient ramené à l'heure d'enregistrement n'est pas très compétitif par rapport aux autres supports, ce qui en fait un support de stockage court terme très efficace et pratique, mais un mauvais candidat pour l'archivage.

Par rapport aux critères de coût et de volume par heure d'enregistrement, les DVD sont un bon compromis entre stockage court terme et archivage, mais ils ont le défaut d'être limité à 4,7 Go, ce qui équivaut, comme pour les clés USB, à quelques heures. Les récents supports Blu-ray offrent une capacité plus grande, mais sont encore très chers

Le disque dur interne est la solution la plus pratique pour stocker à court ou moyen terme des contenus audio-vidéo. Il a l'avantage d'être complètement transparent pour l'utilisateur et convient donc pour les téléspectateurs les moins technophiles. Un enregistreur à disque dur peut stocker facilement 100 ou 200 heures de vidéo, grâce à la capacité croissante des disques durs. On se heurte toutefois à deux obstacles majeurs. D'une part, une taxation inégale d'un pays à un autre, ce qui ne simplifie pas la mise sur le marché au niveau européen. En particulier, la solution est peu attractive dans les pays où les taxes sont très élevées, et peuvent représenter plus que le prix de l'enregistreur lui-même. D'autre part, la solution du disque dur interne n'est absolument pas adaptée à l'archivage, puisque sa capacité est limitée. Lorsque le disque interne est saturé, il faut effacer des enregistrements pour libérer de la place.

La solution du disque dur externe est à ce jour la plus souple et la moins onéreuse pour procéder à du stockage court terme et de l'archivage de contenus audio-vidéo. Pour des raisons de facilité d'accès, les enregistreurs munis d'un port USB dédié à la connexion d'un disque dur externe ont un connecteur USB situé en façade. L'utilisateur pose alors le disque externe devant l'enregistreur ou à côté de celui-ci, et relie le disque à l'enregistreur au moyen d'un cordon USB standard. Le côté pratique du dispositif se heurte néanmoins à ce que les anglo-saxons ont baptisé WAF pour Wife Acceptance Factor, qui traduit le fait que toute innovation technologique, aussi performance soit-elle, aura de la difficulté à conquérir un large public si elle implique l'utilisation de moyens de mise en oeuvre disgracieux. Dans le cas du disque dur externe, on se heurte à ce principe puisqu'on ne peut s'affranchir de câblages visibles entre la face avant de l'enregistreur et le boîtier externe.

C'est l'objet de la présente invention que de proposer un enregistreur offrant la possibilité de stockage et archivage pour un coût compétitif, tout en ayant des caractéristiques techniques compatibles avec un esthétisme acceptable.

### Description de l'invention

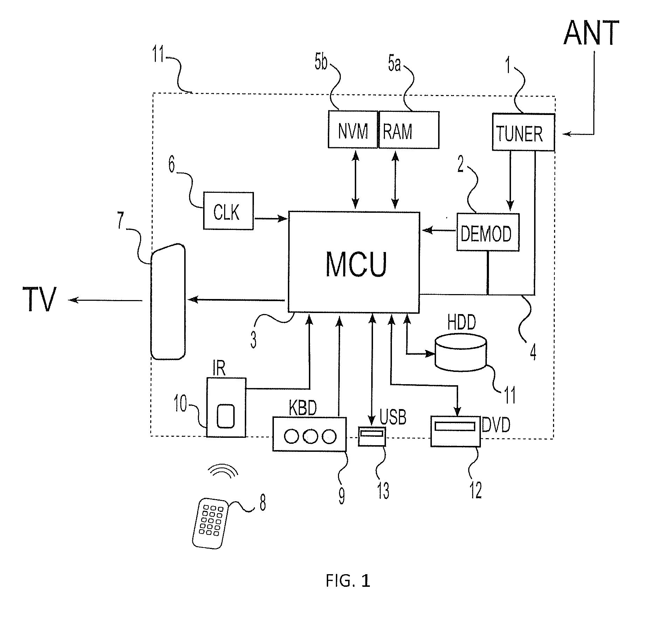

Les récepteurs / enregistreurs de radiodiffusion utilisent pour la plupart une architecture commune basée sur un microcontrôleur (MCU) dédié au traitement du signal, équipé de périphériques tels que décrits sur la figure 1.

Un tuner (1), où l'on vient raccorder l'antenne de réception, permet de sélectionner la fréquence de la chaîne que l'utilisateur souhaite regarder et/ou enregistrer. Le tuner est adapté à la gamme de fréquence caractéristique du moyen de diffusion (terrestre, câble, satellite). Ce tuner fournit au démodulateur (2) un signal radio fréquence (RF) composé d'une seule fréquence. Le rôle du démodulateur consiste à extraire les données utiles véhiculées dans le signal RF, à savoir le flux de transport dans le cas d'une réception en numérique. Dans le cas d'une réception via un opérateur de téléphonie, l'ensemble tuner + démodulateur sera remplacé par une interface réseau, typiquement de type IP sur connecteur RJ45. Le flux de transport est organisé de manière normée, par exemple dans le format DVB pour les pays européens.

Le flux de transport est directement acheminé au microcontrôleur (3) qui assure les fonctions principales de l'appareil, à savoir
- Recevoir et interpréter les commandes de l'utilisateur (télécommande ou face avant),
- Piloter le fonctionnement du tuner et du démodulateur,
- Sélectionner dans le flux de transport les données propres à la chaîne regardée,
- Décoder l'audio et la vidéo,
- Fournir des signaux exploitables par le téléviseur, l'écran et/ou les haut-parleurs,
- Contrôler le moyen de stockage (interne ou externe) en écriture et en lecture,
- Gérer une interface utilisateur pour l'installation et la configuration de l'appareil.

Le microcontrôleur communique généralement avec le tuner et le démodulateur grâce à un bus (4), par exemple le bus I²C. Pour fonctionner, le microcontrôleur a besoin de mémoire vive (5a) et de mémoire non volatile (5b). Cette dernière conserve le programme qu'exécute le microcontrôleur, ainsi que les données de l'utilisateur (réglages personnels, liste des chaînes, etc.) lorsque l'appareil est en veille ou déconnecté du secteur.

Le système est rythmé par une horloge interne (6) qui fournit les impulsions de cadencement du microcontrôleur et garde l'heure et la date disponibles à tout instant.

Les microcontrôleurs modernes fournissent généralement des sorties analogiques directement exploitables sur l'interface analogique (7), que ce soit sous forme de connecteur péritel ou RCA/CINCH, par exemple. Pour un récepteur haute définition, on trouvera également des sorties numériques, telles qu'une interface HDMI.

L'interface avec l'utilisateur se fait principalement avec la télécommande (8) ou les boutons du clavier (9) situé en face avant de l'appareil. Le microcontrôleur reçoit les signaux provenant de la télécommande grâce à un module (10) de réception infrarouge situé en façade de l'appareil.

L'enregistrement peut se faire sur un moyen de stockage interne (11), tel qu'un disque dur, et/ou sur un support amovible via une interface normalisée (12) telle qu'un lecteur de cassette vidéo ou un DVD. L'enregistreur peut également proposer un port (13) dans un format standard, tel que le bus USB, de manière à y connecter un moyen de stockage mobile comme un disque dur externe.

Par souci de clarté, nous n'avons pas fait apparaître sur le schéma de la figure 1 des éléments que l'on trouve systématiquement ou optionnellement, comme le circuit d'alimentation, un deuxième tuner, un lecteur de carte de contrôle d'accès pour les chaînes cryptées etc. et qui n'aident pas à comprendre le fonctionnement de base de l'appareil.

Le micro-contrôleur est généralement situé sur une carte mère, où l'on retrouve également le tuner, le démodulateur, la mémoire, l'horloge, ainsi que des connecteurs pour les liaisons vers les périphériques situés en face avant, tels que le clavier, le récepteur infrarouge, ainsi que les moyens de stockage internes ou externes.

Les enregistreurs existants utilisent divers moyens de stockage, chacun ayant des inconvénients tels présentés plus haut, qu'on peut résumer de la sorte :
- Capacité limitée et coût horaire élevé pour les supports mobiles tels que les clés USB et les DVD vierges
- Capacité limitée et archivage impossible pour les disques durs internes
- Présence inéluctable de câblages disgracieux pour les disques durs externes

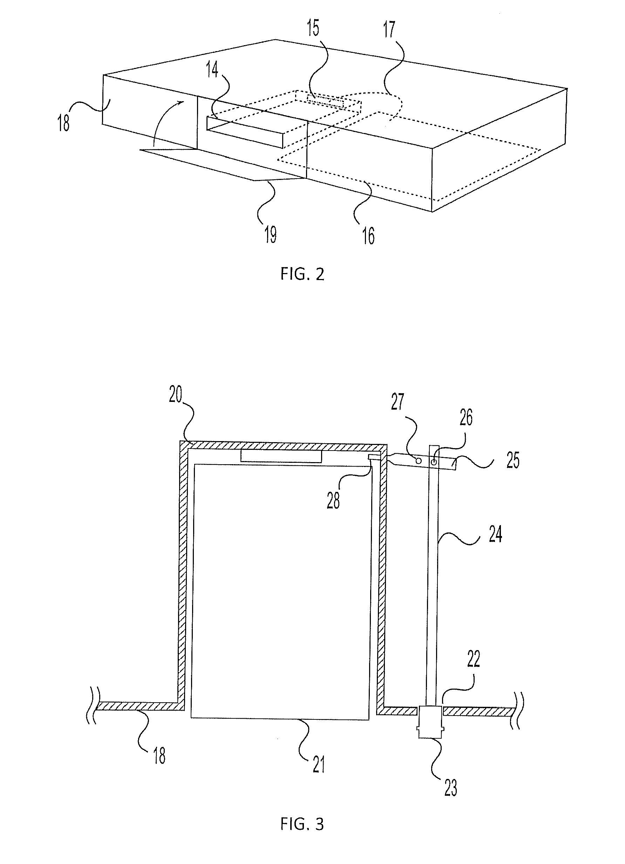

Comme le montre la figure 2, l'enregistreur selon l'invention diffère des enregistreurs existants en ce qu'il dispose d'un logement (14) d'une profondeur d'environ 10 cm, d'une largeur de 7 cm, et d'une hauteur de 1 cm au fond duquel un connecteur SATA femelle (15) est disposé de manière à pouvoir y connecter un disque dur standard au format SATA 2,5 pouces, qu'on trouve facilement dans le commerce au rayon informatique. L'emplacement du connecteur SATA femelle est tel qu'il coïncide avec le connecteur SATA mâle du disque dur, lorsque celui-ci est inséré dans le logement.

En variante, le logement pourra avoir des dimensions supérieures, de manière à accueillir des disques SATA de type 3,5 pouces, mais les dimensions standardisées des disques 2,5 pouces en font un format privilégié. Le connecteur SATA femelle est relié à la carte mère (16) au moyen d'une liaison (17) de données numériques, telle qu'une liaison e-SATA ou USB, ladite liaison étant connectée au moyen de contrôle de disque intégré sur la carte mère, ce moyen étant généralement directement intégré dans le micro-contrôleur.

Le logement est situé en façade (18) de l'enregistreur de manière à en faciliter l'accès, et pouvoir très aisément remplacer le disque dur par un autre lorsque le premier est saturé. Lorsqu'un disque dur est inséré dans le logement l'enregistreur procure les mêmes éléments de confort et de performance qu'un appareil équipé d'un disque dur interne. Lorsque le premier disque est plein, il est extrêmement aisé de l'extraire de l'enregistreur, et de le remplacer par un disque vierge, avec la possibilité d'archiver le contenu du premier disque avec les avantages connus des disques externes, en termes de mobilité, de coût d'archivage et d'encombrement.

Selon une réalisation avantageuse de l'invention, une trappe (19) amovible peut s'ouvrir et se fermer, de telle sorte que lorsqu'elle est ouverte, le logement est accessible, et lorsqu'elle est fermée, le logement est masqué, permettant de gommer toute discontinuité dans l'esthétisme de la face avant de l'enregistreur.

Dans une version simplifiée de l'invention, le logement présente une profondeur légèrement inférieure à la longueur du disque, soit environ 9 cm pour un logement destiné à accueillir un disque de 2,5 pouces, de sorte que, lorsque le disque est enfoncé au maximum, la partie qui dépasse laisse une prise d'environ 1 cm, facilitant la préhension du disque en vue de son extraction.

Dans une version sophistiquée de l'invention, la profondeur du logement est égale à la longueur du disque, de sorte que la face visible du disque affleure la face avant de l'enregistreur lorsque le disque est complètement enfoncé dans le logement. Un mécanisme est mis en place pour permettre l'extraction du disque. Ce mécanisme peut par exemple inspiré de la Fig. 3 où l'on peut voir une coupe horizontale du logement (20) dans lequel est inséré le disque (21). La face avant (18) possède une ouverture (22) destinée à recevoir un bouton poussoir (23) solidaire d'une tige (24) reliée à un levier (25) au moyen d'un rivet mobile (26). Le levier tourne autour d'un axe de rotation (27) de telle sorte qu'un appui sur le bouton (23) provoque un mouvement vers l'avant de l'extrémité (28) du levier, repoussant ainsi vers l'extérieur le disque. Les caractéristiques mécaniques du levier sont telles qu'un appui fasse ressortir le disque d'une longueur d'au moins un centimètre, ce qui permet une préhension confortable en vue de son extraction de l'enregisteur.

## Revendications

1. Enregistreur de signaux de télévision numérique comprenant des moyens de réception et de décodage des signaux audio-vidéo et des moyens de contrôle d'un disque dur au format SATA, lesdits moyens de contrôle étant situés sur la carte mère de l'enregistreur, **caractérisé en ce qu'**il dispose d'un logement situé en face avant, ledit logement possédant des dimensions semblables à celle du disque dur, et disposant d'un connecteur SATA femelle au fond dudit logement, ledit connecteur étant relié aux moyens de contrôle du disque dur via une liaison série interne à l'enregistreur.

2. Enregistreur selon la revendication 1, **caractérisé en ce qu'**une trappe amovible disposée en face avant de l'enregistreur donne accès au logement lorsqu'elle est ouverte et bouche l'accès au logement lorsqu'elle est fermée, ladite trappe étant réalisée dans une matière et un coloris permettant une continuité esthétique de la face avant.

3. Enregistreur selon la revendication 1 ou 2, **caractérisé en ce qu'**il dispose d'un mécanisme d'éjection du disque couplé à un bouton situé en façade de l'enregistreur, ledit mécanisme étant dimensionné de manière à ce que l'éjection du disque permette sa préhension en vue de son extraction manuelle.
